## Europäisches Patentamt

## European Patent Office

## Office européen des brevets

(11) Veröffentlichungsnummer: **0 209 609**
**B1**

(12) **EUROPÄISCHE PATENTSCHRIFT**

(45) Veröffentlichungstag der Patentschrift:
31.05.89

(21) Anmeldenummer: 85108944.1

(22) Anmeldetag: 17.07.85

(51) Int. Cl.⁴: **B29C 67/22**, B29C 39/16
// B29K105:04

(54) Doppelband-Formmaschine.

(43) Veröffentlichungstag der Anmeldung:
28.01.87 Patentblatt 87/5

(45) Bekanntmachung des Hinweises auf die Patenterteilung:
31.05.89 Patentblatt 89/22

(84) Benannte Vertragsstaaten:
AT BE CH DE FR GB IT LI LU NL SE

(56) Entgegenhaltungen:
DE-C- 3 018 357
FR-A- 2 254 431
GB-A- 1 048 268
GB-A- 2 053 824
US-A- 3 887 314
US-A- 4 178 144
US-A- 4 265 608

(73) Patentinhaber: Prignitz, Herbert, Papyrusweg 12,
D-2000 Hamburg 74(DE)

(72) Erfinder: Prignitz, Herbert, Papyrusweg 12,
D-2000 Hamburg 74(DE)

(74) Vertreter: Richter, Werdermann & Gerbaulet et al, Neuer
Wall 10, D-2000 Hamburg 36(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Doppelband-Formmaschine gemäß dem Oberbegriff des Anspruchs 1 für die Herstellung von Schaumkunststoffplatten als fortlaufender Strang mit zwei mit entgegengesetztem Drehsinn umlaufenden endlosen Transportbändern, die über je eine Antriebsrolle (bzw. Antriebskettenräder bei Plattenbändern) und eine Umlenkrolle (bzw. ein Umlenkrad) geführt sind, wobei die sich gegenüberliegenden, parallel und in gleicher Richtung laufenden Bandabschnitte den zur Formung des fortlaufenden Schaumkunststoffstranges dienenden Raum begrenzen, wobei die Transportbänder einzeln antreibbar sind.

Eine derartige Maschine ist aus US-A 4 178 144 bekannt.

Derartige Maschinen weisen zwei mit entgegengesetztem Drehsinn umlaufende endlose Transportbänder auf. Diese können beispielsweise Gurte oder Stahlbänder sein, welche über eine Antriebsrolle, als Stützelemente dienende Gleitbahnen und um eine Umlenkrolle geführt sind. Die Transportbänder können auch Plattenbänder sein, die über Antriebs- und Umlenkkettenräder geführt und mit Stützrollen versehen sind, die an Stützelementen in Form von Laufschienen entlanglaufen können. Die beiden sich gegenüberliegenden, parallel und in gleicher Richtung laufenden Abschnitte der beiden Bänder begrenzen den zur Formung des fortlaufenden Schaumkunststoffstranges dienenden Raum an seinen beiden Flachseiten. Die beiden Schmalseiten dieses Raumes können durch ebenfalls umlaufende Seitenbänder oder durch feststehende Seitenschienen begrenzt sein, deren Lage einstellbar ist.

Zum Antrieb der Transportbänder war bei den bisher bekannten Ausführungsformen solcher Doppelband-Formmaschinen ein gemeinsamer, mit den Antriebsrollen bzw. Antriebskettenrädern gekuppelter elektrischer Antriebsmotor vorgesehen. Ein genauer Gleichlauf der aktiven, den Formungsraum begrenzenden Bandabschnitte war damit nicht oder nur mit erheblichem Aufwand an mechanischen Einrichtungen zu erreichen. Ein Gleichlauf der Bandabschnitte ist jedoch von großer Wichtigkeit, da das Entstehen von Scherkräften in dem Schaumstoffstrang, die dessen Gefügestruktur zerreißen könnten, vermieden werden muß. Die Erfüllung dieser Forderung ist schwierig, weil der Gleichlauf der aktiven Bandabschnitte und die Gleichheit der von den Bandabschnitten auf das Material des Schaumstoffkunststoffstranges übertragenen Zugkräfte von den verschiedensten, nicht ohne weiteres zu beherrschenden Einflüssen abhängen. Zum Beispiel kann bei der durch Friktion erfolgenden Übertragung des Drehmoments von den Antriebstrommeln auf Gurte oder Stahlbänder ein Schlupf auftreten. Ferner sind unterschiedliche Abweichungen des Durchmessers der Antriebstrommeln infolge Verschmutzung oder Abrieb möglich. Auch kann Verschmutzung der Stützplatten der Transportbänder eine Beeinflussung der Zugkräfte bewirken. Ferner belasten das Gewicht der den Formkanal oben und unten begrenzenden Bandabschnitte und das Gewicht der in den Kanal eingeführten Materialien, insbesondere das Schaumstoffmaterial sowie dessen Kaschierungen und Auflagen, den unteren Bandabschnitt und dessen Stützplatte, was eine Erhöhung der Zugkraft in dem unteren Band zur Folge hat, während andererseits die Kraft des in dem Formkanal aufschäumenden Gemischs sowohl den unteren als auch den oberen Bandabschnitt belastet. Alle die Gleichheit der Zugkräfte in den aktiven Bandabschnitten störenden Ursachen erfordern jeweils einen sofortigen Ausgleich.

Es kommt hinzu, daß eine Höhenverstellbarkeit des oberen Bandes erforderlich ist, um Schaumkunststoffplatten verschiedener Dicke herstellen zu können. Mittels rein mechanischer verstellbarer Kupplungseinrichtungen zwischen dem Antriebsmotor und den Antriebsrollen bzw. Antriebskettenrädern der Bänder ist die Verwirklichung einer solchen Höhenverstellbarkeit äußerst schwierig.

Es ist bereits eine Vorrichtung zur Formung von endlosen Schaumstoffsträngen mit Hilfe von Endlosgurtförderern bekannt, bei denen jeder Gurt mit einem eigenen Antrieb versehen ist. Um zu vermeiden, daß ein Förderer mit einer höheren Geschwindigkeit als der andere Förderer angetrieben wird, und dadurch nachteilige Scherbeanspruchungen am zu formenden Gut entstehen, ist dabei vorgesehen, daß beide Förderer mit der gleichen Geschwindigkeit während des Starts angetrieben werden, bis das feste Gut, das sich zwischen den beiden Förderern ausdehnt, den langsameren Förderer mit der Geschwindigkeit des schnelleren Förderers antreibt. Vorzugsweise wird ein Synchromotor zum Antrieb jedes Förderers so eingesetzt, daß der dem langsameren Förderer zugeordneten Synchromotor über eine Rutschkupplung abgeschaltet wird. Es wird dabei lediglich versucht, den Gleichlauf während des Anlaufs der Maschine durch eine Rutschkupplung zu regeln, wobei davon ausgegangen wird, daß die Vorrichtung im normalen Betriebszustand zu einem annähernden Gleichlauf dadurch gelangt, daß die Bewegungen des einen Bandes sich über die Mitnahme durch den sich formenden Kunststoffstrang auf das andere Band übertragen. Dabei wird sogar vorgeschlagen, den Antriebsmotor eines Bandes während des Betriebes ganz abzuschalten. Hierbei wird also Kraft durch das zu formende Gut übertragen, was gerade zu hohen Spannungen in dem zu formenden Gut führt. Aber gerade die Entstehung von Spannungen im Schaumstoffstrang ändert die Gefügestruktur so, daß nicht das gewünschte Endergebnis erhalten wird. Die beiden in Betrieb befindlichen Synchronmotoren können jedoch lediglich bewirken, daß die Umdrehungszahlen der beiden Antriebsrollen gleich sind. Die Synchronmotoren vermögen aber nicht, irgendwelche Differenzen, z.B. im Durchmesser oder durch Verschmutzen der Antriebsrollen oder durch Rutschen der Antriebsrollen, unter den Treibgurten auszugleichen und so den Gleichlauf herzustellen (US-A 4 178 144).

Auch ist bereits eine Vorrichtung zur Herstellung zellporiger Produkte wie Schaumkunststoffe vorgeschlagen worden, die einen oberen und einen unteren Hauptförderer umfaßt, die sich jeweils aus Verbindungsplatten oder -paletten zusammensetzen, die mit ihren äußersten Enden an zwei seitlichen Endlosrollenketten befestigt sind, die jeweils durch einen entsprechenden Antrieb angetrieben werden. Diese Maschine umfaßt darüber hinaus zwei Zwischenförderer, die jeweils ebenfalls aus Endlosrollenketten bestehen. Diese Zwischenförderer bilden je eine bewegliche Auflage, die den ihr zugeordneten Hauptförderer abstützt und unabhängig von diesem angetrieben wird. Bei dieser Vorrichtung wird das Problem gelöst, das dadurch entsteht, daß zwischen den einzelnen Platten des Hauptförderers Zwischenräume entstehen können. Zur Lösung dieses Problems wird vorgeschlagen, daß die Zwischenförderer nicht die gleiche Geschwindigkeit wie die Hauptförderer haben, sondern eine höhere, damit die Platten der Endlosbänder keine Fugen, also einen geschlossenen Kanal bilden. Dabei wird vorgeschlagen, daß die Zwischenförderer den einzelnen Platten des Hauptförderers durch Reibung einen Schub übertragen, der sich zum Zug der äußeren Ketten addiert (FR-A 2 254 431).

Demgegenüber ist es Aufgabe der vorliegenden Erfindung, eine Maschine zu schaffen, bei der mit möglichst einfachen Mitteln eine Entstehung schädlicher Scherkräfte innerhalb des Schaumstoffstranges im Formkanal vermieden wird.

Die erfindungsgemäße Lösung besteht dabei darin, daß bei einer Vorrichtung der eingangs genannten Art folgende Merkmale vorgesehen werden:

a) die Transportbänder sind als Gurte, Stahlbänder oder Plattenbänder ausgebildet,

b) die im Bereich der Formung des fortlaufenden Schaumstoffkunststoffstranges befindlichen, sich gegenüberliegenden Abschnitte der Bänder sind durch Stützelemente abgestützt, und

c) die Antriebsrollen (bzw. -kettenräder bei Plattenbändern) sind mit auf Gleichlauf der sich gegenüberliegenden Bandabschnitte geregelten elektrischen Einzelantrieben versehen, wobei die Regelung der Einzelantriebsmotoren auf Gleichlauf der Bandabschnitte in Abhängigkeit von der Laufgeschwindigkeit der Bandabschnitte erfolgt, und

d) das obere Transportband ist zusammen mit den dazugehörigen Trag- und Stützelementen (13, 23) und dem zu ihm gehörenden Einzelantriebsmotor (22) über Verstellvorrichtungen (28) höhenverstellbar angeordnet.

Bei einer solchen Doppelband-Formmaschine wird auf einfache Weise sowohl beim Anfahren als auch während des Betriebes ein genauer Gleichlauf der aktiven, den Formkanal und damit den Schaumkunststoffstrang begrenzenden Bandabschnitte sowie Gleichheit der von den Bandabschnitten auf den Schaumkunststoffstrang übertragenen Zugkräfte erreicht, so daß schädliche Scherkräfte in diesem nicht auftreten können. Umständliche und empfindliche mechanische Kraftübertragungselemente, wie sie zur Übertragung des Drehmomentes von einem gemeinsamen Antriebsmotor aus auf die Antriebsrollen benötigt werden, sind nicht mehr erforderlich. Ein weiterer Vorteil der Erfindung besteht darin, daß die Voraussetzung für ein besonders einfaches Verändern des Abstandes der einander gegenüber angeordneten Bänder geschaffen ist, weil die das obere umlaufende Band tragenden Rollen oder Kettenräder zusammen mit dem Einzelantriebsmotor des oberen Bandes gemeinsam höhenverstellbar angeordnet werden können.

Vorteilhafte Ausgestaltungen der Erfindung sind in den Unteransprüchen gekennzeichnet.

Im folgenden wird der Gegenstand der Erfindung in den Zeichnungen erläutert. Es zeigt:

Fig. 1 schematisch die Seitenansicht der wesentlichen Teile einer Doppelband-Formmaschine,

Fig. 2, in Bandlaufrichtung gesehen, die höhenverstellbare Anordnung der Bänder bei verhältnismäßig großem Abstand und

Fig. 3 dieselbe Anordnung bei verhältnismäßig kleinem Abstand der Bänder.

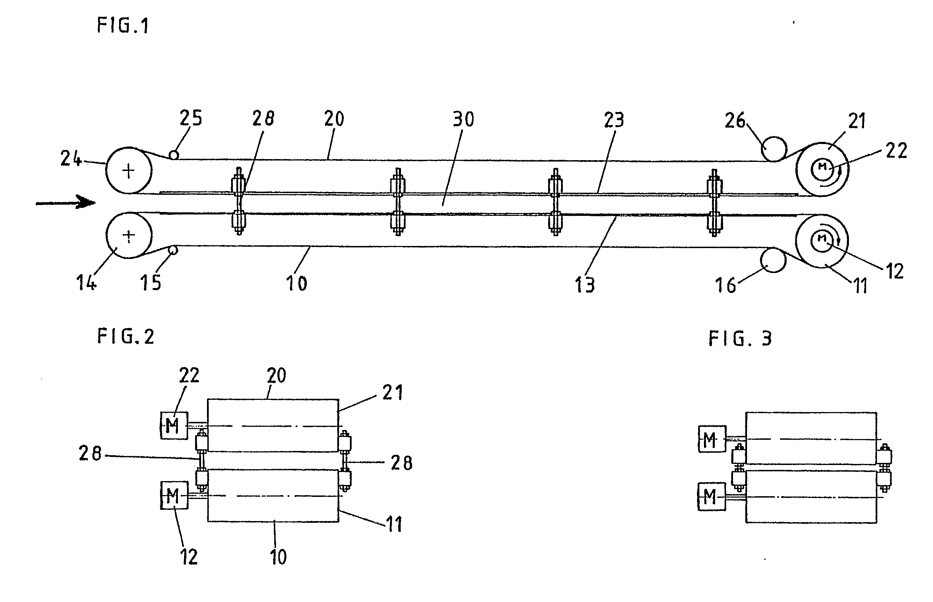

In Fig. 1 ist das untere endlose Transportband mit 10 und das obere mit 20 bezeichnet. Jedes dieser Transportbänder ist über eine Antriebsrolle 11 bzw. 21 geführt. Die Antriebsrollen sind mit je einem elektrischen Einzelantriebsmotor 12, 22 direkt gekuppelt, von dem sie mit entgegengesetztem Drehsinn, wie durch Pfeilrichtung angedeutet, angetrieben werden können. Die einander unmittelbar gegenüberliegenden Bandabschnitte sind über plattenförmige Stützelemente 13, 23, welche Gleitbahnen bilden, sowie über Umlenkrollen 14, 24 und Laufrollen 15, 16 bzw. 25, 26 geführt. Die Umlenkrollen oder die Laufrollen können auch als Spannrollen für die Bänder 10, 20 ausgebildet sein.

Der Raum 30 zwischen den von den Stützelementen 13, 23 abgestützten Abschnitten der Bänder 10, 20 dient zur Formung des fortlaufenden Schaumkunststoffstranges, der nach dem Verlassen der Maschine zur Herstellung von Schaumkunststoffplatten von der gewünschten Länge unterteilt werden kann. Dieser kanalförmige Raum wird an seinen beiden Flachseiten von den aktiven Abschnitten der Bänder 10, 20 begrenzt. Die beiden Schmalseiten dieses Formkanals können durch (nicht dargestellte) Begrenzungen in Form ebenfalls umlaufender Seitenbänder oder feststehender einstellbarer Seitenschienen geschlossen sein. Das aufschäumbare Kunststoffgemisch wird am einen Ende der Maschine, wie in Fig. 1 links mit einem Pfeil angedeutet, in den Formkanal 30 eingeführt, füllt dessen Querschnitt beim Aufschäumen aus und verfestigt sich während seines Durchlaufs.

Längs der Maschine können in Abständen voneinander Verstellvorrichtungen 28 mit Hubspindel od. dgl. zu beiden Seiten des Formkanals angeordnet sein. Diese dienen dazu, den Abstand des oberen Bandes 20 nebst der dazugehörigen Stützplatte 23 und aller anderen zu ihm gehörenden Antriebs- und Führungseinrichtungen von dem unteren Band 10 gleichmäßig zu verändern, um dadurch die Höhe des Formkanals 30 und damit die Dicke der herzustellenden Schaumkunststoffplatten einstellen zu können.

In Fig. 2 und 3, welche die Maschine in Bandlaufrichtung gesehen darstellen, sind zwei verschiedene Höhenlagen des oberen Bandes mit den zu ihm gehörenden Teilen gegenüber dem unteren Band und den zu diesem gehörenden Teilen veranschaulicht.

Bei Fig. 2 ist die Höhe des Formkanals 30 größer als bei Fig. 3. Dadurch, daß die Antriebsrollen 11, 21 mit Einzelantriebsmotoren 12, 22 versehen sind, wird es möglich, das obere Band 20 mit allen seinen Antriebs- und Führungsteilen als eine gemeinsam mittels der Hubvorrichtung 28 anhebbare Einheit auszubilden, ohne da umständliche verstellbare Transmissionen zwischen den Antriebsrollen der beiden Bänder und einem für diese gemeinsamen Antriebsmotor erforderlich wären, und es ergeben sich auch keine Ungleichheiten der Geschwindigkeit des oberen und des unteren Bandes bei Änderung der Zugkraft. Eine Regelung der Einzelantriebsmotoren beider Bänder auf Gleichlauf bzw. auf Gleichheit der Zugkräfte in den beiden Bändern ist mit verhältnismäßig einfachen Mitteln durchführbar, beispielsweise bei Verwendung durch Frequenzänderungen regelbarer Wechselstrom- oder Drehstrommotoren. Die Regelung auf Gleichlauf kann in Abhängigkeit von Änderungen des Drehmoments oder der Stromaufnahme der Motoren oder stattdessen in Abhängigkeit von der Laufgeschwindigkeit der Bandabschnitte erfolgen.

Die Möglichkeiten zur Ausbildung einer Doppelband-Formmaschine gemäß der Erfindung sind jedoch nicht auf das vorstehend beschriebene Ausführungsbeispiel beschränkt. So ist es insbesondere auch möglich, als elektrische Einzelantriebe Gleichstrommotoren, wie z.B. Gleichstromnebenschlußmotoren, Gleichstromhauptschlußmotoren oder Gleichstromdoppelschlußmotoren zu verwenden.

## Patentansprüche

1. Doppelband-Formmaschine für die Herstellung von Schaumkunststoffplatten als fortlaufender Strang mit zwei mit entgegengesetztem Drehsinn umlaufenden endlosen Transportbändern, die über je eine Antriebsrolle (bzw. Antriebskettenräder bei Plattenbändern) und eine Umlenkrolle geführt sind, wobei die beiden sich gegenüberliegenden, parallel und in gleicher Richtung laufenden Bandabschnitte den zur Formung des fortlaufenden Schaumkunststoffstranges dienenden Raum begrenzen, wobei die Transportbänder einzeln antreibbar sind, gekennzeichnet durch folgende Merkmale:
   a) die Transportbänder (10, 20) sind als Gurte, Stahlbänder oder Plattenbänder ausgebildet,
   b) die im Bereich der Formung des fortlaufenden Schaumkunststoffstranges befindlichen, sich gegenüberliegenden Abschnitte der Bänder (10, 20) sind durch Stützelemente (13, 23) abgestützt,
   c) die Antriebsrollen (bzw. -kettenräder bei Plattenbändern) (11, 21) der beiden Transportbänder (10, 20) sind mit auf Gleichlauf der sich gegen-überliegenden Bandabschnitte geregelten elektri-schen Einzelantrieben (12, 22) versehen, wobei die Regelung der Einzelantriebsmotoren auf Gleichlauf der Bandabschnitte in Abhängigkeit von der Laufgeschwindigkeit der Bandabschnitte erfolgt, und das obere Transportband ist zusammen mit den dazugehörigen Trag- und Stützelementen (13, 23) und dem zu ihm gehörenden Ein-zelantriebsmotor (22) über Verstellvorrichtun-gen (28) höhenverstellbar angeordnet.

2. Maschine nach Anspruch 1, dadurch gekennzeichnet, daß als elektrische Einzelantriebe Gleichstrommotoren vorgesehen sind.

3. Maschine nach Anspruch 2, dadurch gekenn-zeichnet, daß die Gleichstrommotoren Nebenschluß-motoren sind.

4. Maschine nach Anspruch 2, dadurch gekenn-zeichnet, daß die Gleichstrommotoren Hauptschluß-motoren sind.

5. Maschine nach Anspruch 2, dadurch gekenn-zeichnet, daß die Gleichstrommotoren Doppel-schlußmotoren sind.

6. Maschine nach Anspruch 1, dadurch gekennzeichnet, daß als elektrische Einzelantriebe durch Frequenzänderungen regelbare Wechselstrom- oder Drehstrommotoren verwendet sind.

7. Maschine nach Anspruch 1, dadurch gekennzeichnet, daß die Regelung der Einzelantriebsmotoren auf Gleichlauf der Bandabschnitte in Abhängigkeit von Änderungen ihres Drehmoments oder ihrer Stromaufnahme erfolgt.

## Claims

1. Double endless belt-shaping apparatus for the manufacture of foamed plastic boards in the form of a continuous strand with two endless conveyor belts rotating in opposite directions which are conducted via a driving roller (or driving chain wheels in the case of plate conveyors) and a deflection roller, in which the two opposite belt sections running parallely and in the same direction, delimit the space serving to shape the continuous foamed plastic strand, the conveyor belts being individually drivable, characterized by the following features:
   a) the conveyorbelts (10, 20) are constructed as belts, steel belts or plate belts;
   b) the opposite sections of the belts (10, 20) located within the area where the continuous foamed plastic strand is shaped, are supported by supporting members (13, 23);
   c) the driving rollers (or driving chain wheels in the case of plate conveyors) (11, 21) of the two conveyor belts (10, 20) are provided with electrical single driving means (12, 22) adjusted to synchronism of the opposite belt sections, the adjustment of the single driving motors to synchronism of the belt sections being effected as a function of the speed of the belt sections, and
   d) the upper conveyor belt, together with the appropriate carrying and supporting members (13, 23) and the single driving motor (22) appertaining thereto, is disposed so as to be vertically adjustable with the aid of adjustment means (28).

2. Apparatus according to Claim 1, characterized in that direct current motors are provided as single electrical driving means.

3. Apparatus according to Claim 2, characterized in that the direct current motors are shunt-wound electric motors.

4. Apparatus according to Claim 2, characterized in that the direct current motors are series-wound electric motors.

5. Apparatus according to Claim 2, characterized in that the direct current motors are compound-wound electric motors.

6. Apparatus according to Claim 1, characterized in that an electrical single drive means, alternative current or rotary current motors are used which are adjustable by means of frequency changes.

7. Apparatus according to Claim 1, characterized in that the adjustment of the single driving motors to synchronism of the belt sections is effected as a function of changes in their current consumption.

**Revendications**

1. Machine de mise en forme à double bande sans fin pour la fabrication de plaques de matière plastique cellulaire comme boudin continu avec deux bandes transporteuses sans fin circulant en sens de rotation inverse, qui sont guidées chacune sur un rouleau de commande (ou sur des roues à chaîne de commande pour les convoyeurs à tabliers), les deux tronçons de bande situés en face l'un de l'autre, qui marchent parallèlement et dans le même sens, délimitant l'espace qui sert à former le boudin continu de matière plastique cellulaire, les bandes transporteuses pouvant être commandées séparément, caractérisée par les caractéristiques suivantes:
a) les bandes transporteuses (10, 20) sont configuées comme des courroies, des rubans en acier ou des convoyeurs à tabliers;
b) les tronçons de bandes (10, 20) qui sont en face l'un de l'autre et qui se trouvent dans la zone de façonnage du boudin continu de matière plastique cellulaire sont supportés par des éléments d'appui (13, 23);
c) les rouleaux de commande (et/ou les roues à chaîne de commande pour les convoyeurs à tabliers) (11, 21) des deux bandes transporteuses sont équipés de commandes éléctriques séparées (12, 22) réglées sur la synchronisation des tronçons de bande qui sont en face l'un de l'autre, le réglage des moteurs des commandes séparées sur la synchronisation des tronçons de bande se faisant en fonction de la vitesse de marche des tronçons de bande;
d) la bande transporteuse supérieure est disposée en étant réglable en hauteur, avec les éléments de support et d'appui (13, 23) qui en font partie et avec le moteur de commande séparée (22) qui lui appartient au moyen de dispositifs de réglage (28).

2. Machine selon la revendication 1, caractérisée en ce que des moteurs à courant continu sont prévus comme commandes séparées électriques.

3. Machine selon la revendication 2, caractérisée en ce que les moteurs à courant continu sont des électromoteurs en dérivation.

4. Machine selon la revendication 2, caractérisée en ce que les moteurs à courant continu sont des moteurs excités en série.

5. Machine selon la revendication 2, caractérisée en ce que les moteurs à courant continu sont des moteurs à excitation compound.

6. Machine selon la revendication 1, caractérisée en ce que des moteurs à courant alternatif ou des moteur à courant triphasé réglables par modifications de fréquence sont utilisés comme commande séparées.

7. Machine selon la revendication 1, caractérisée en ce que le réglage des moteurs des commandes séparées sur la synchronisation des tronçons de bande se fait en fonction des variations de leur couple moteur ou de leur intensité de courant.

FIG.1

FIG.2                    FIG.3

EP 0 209 609 B1